# EUROPEAN PATENT APPLICATION

(11) **EP 1 553 398 A1**
(43) Date of publication of application: **13.07.2005**
(21) Application number: 03788045.7
(22) Date of filing: 06.08.2003
(51) Int. Cl.: G01N 21/17

(54) **DEW SENSOR**

(30) Priority: 19.08.2002 JP 2002238322
(71) Applicant: NILES CO., LTD., Tokyo 143-8521 (JP)
(72) Inventor: MURAKAMI, Harunori Nippon Sheet Glass Co. Ltd, Osaka541-0 041 (JP); FURUSAWA, Satoshi Nippon Sheet Glass Co. Ltd., Osaka-shi, Osaka 541-0041 (JP); SASAKI, Mikio Yuugenkaisha Omega Techno Modeling, Sagamihara-shi, Kanagawa 229-1116 (JP)
(74) Representative: Wilson Gunn M'Caw
(86) International application number: PCT/JP2003/009988
(87) International publication number: WO 2004/017053

(57) **Abstract**

There is provided a dew condensation detecting apparatus which has a configuration independent of a wavelength of a detected light beam, and which has a heat capacity of the detecting apparatus body and the amount of heat generated therefrom so as to aim at miniaturizing the apparatus. The apparatus has such a configuration that a light beam which is introduced from a light emitting element into the transparent plate travels through the transparent plate with repetitions of total reflection, and is then detected by a light receiving element so as to detect a degree of dew condensation caused on a surface of the transparent plate in accordance with a variation in detected light quantity. The transparent plate is formed of a glass 14 composed of two sheet glasses 10a, 10b bonded to each other through the intermediary of an intermediate film 12, and a reflection film 24 is formed in a part of the intermediate film, in parallel with the surfaces of the sheet glasses while a micro-mirror array 26 for turn-back reflection, composed of oblique reflection surfaces inclined to the surfaces of the sheet glasses, being spaced from one another, is provided in the vicinity of one end of the reflection film, the light emitting element 20 and the light receiving element 22 are juxtaposed to each other in the vicinity of the other end of the reflection film, outside of the laminated glass.

## Description

### Technical Field

The present invention relates to a degree of dew condensation caused by water drops sticking to the outer surface of a glass with the use of a light beam introduced in a glass and traveling therethrough with repetitions of total reflection, and in particular to a dew condensation detecting apparatus in which a light beam is repeatedly reflected through turn-back by a micro-mirror array having a plurality of oblique reflection surfaces that are inclined to the glass surface and are spaced from one another. This technology is effective, in particular, for detecting dew condensation on the inner surface of a windshield glass of a vehicle on the passenger compartment side. However, it can be also applied for detecting water drops (rain drops) sticking to the outer surface of the windshield glass.

### Background Art

There have been already proposed and developed several technologies relating to an optical water drop detecting apparatus for detecting water drops sticking to the outer surface of a glass with the use of a light beam which travels therethrough, repeating total reflection. The water drop detecting apparatus of this type has been practically used in, for example, system which detects raindrops sticking to a windshield glass of a vehicle in order to automatically control a wiper.

If dew condensation on a surface of a glass on the passenger compartment side of a vehicle can be detected, dew can be removed by automatically controlling the operation of the air-conditioner with the use of the detection signal. Accordingly, a satisfactory visual field can be ensured for a driver without any extra manipulation burden upon the driver.

Various ways have been considered for detection of dew condensation, and for example, Japanese Patent Publication No. S61-284645 or Japanese Patent Publication No. 2000-296762 discloses such a technology that light of irregular reflection caused by dew condensation is detected in order to detect the dew condensation. Further, as stated above, a process of detecting variation in the quantity of light traveling through a glass with total reflection may be applied for the detection of dew condensation. Further, with the use of this process, there has been proposed an apparatus having a function capable of detecting both rain drops and dew condensation.

For example, Japanese Patent Publication No. 2000-193759 discloses an apparatus which introduces two detection light beams from a light emitting element into a laminated body having two transparent plates bonded to each other so that the detection light beams travel through the laminated body with total reflection, and the detection light beams are detected by light receiving elements in order to detect rain drops and dew condensation. Incidentally, this apparatus is configured such that a hologram is formed between the two transparent plates, and one of two detection light beams is the one which carries out total reflection between one of the two transparent plates and the hologram while the other thereof is the one which carries out total reflection between the other of them and the hologram, that is, the one of the detection light beams detects rain drops and the other one of them detects the dew condensation.

In this rain drop/dew condensation detection apparatus, a total reflection hologram is formed between intermediate film parts of a laminated body (for example, a laminated glass for a vehicle) in order to cause light beams to repeat total reflection, and accordingly, a light beam traveling through the glass on the outer side of the vehicle detects rain drops while a light beam traveling through the glass on the passenger compartment side detects dew condensation. Further, the above-mentioned reference discloses such a configuration that the light emitting element and the light receiving element are located on one and the same side, being juxtaposed with each other, while means for returning light beams are provided on the opposite side. It is noted that there is disclosed the use of a turn-back hologram as the means for returning light beams.

The total reflection hologram or the turn-back hologram used in the above-mentioned prior art technology, is a hologram grating which is formed by recording interference fringes caused by two beams, on a photosensitive medium. This is one type of diffraction gratings, and accordingly, its reflection angle substantially has wavelength dependency. Accordingly, the detection light beam should be monochromatic light with no variation in wavelength. However, no appropriate light emitting element has been found up to now. Although a most typical light emitting diode which is one type of the light emitting elements is inexpensive and has a high degree of luminous efficiency, the wavelength range of light emitted therefrom is broad.

By the way, the temperature in the passenger compartment of a vehicle greatly varies from a below-ice point on the lower side to about 80° C on the higher side in a certain season or in a certain time zone although it is, of course, different, depending upon districts. Semiconductor diodes which are frequently used as light emitting elements for outputting monochromatic light have wavelength vs. temperature characteristics which are worse, and accordingly, an optical path obtained through reflection by a diffraction grating varies. It may be contrived that the temperature characteristic is compensated with the use of a control circuit, but the detecting apparatus itself would become large-sized, resulting in high power consumption. As a result, the detection apparatus body (including a light emitting element, a light receiving element and components associated therewith) eventually has a large heat capacity and a large heat source as well. As a consequence, dew condensation on the surface of the windshield glass becomes different between the zone around the detecting apparatus body and a zone where no components are provided, and a field of view should be ensured, resulting in lowering of the degree of detection accuracy.

In order to avoid the above-mentioned deficiency, a surface zone where dew condensation is detected should be located remote from the detecting apparatus body. As a result, a transmission distance of a light beam introduced into the glass becomes longer, and as a result, a quantity of light detected by the light receiving element becomes less so that the S/N ratio for signal variation becomes worse.

Further, in these years, colored glasses of a green group, having a high thermal insulation effect, are widely used as windshield glasses for vehicles, in order to restrain heat from being propagated into the passenger compartment of a vehicle. Alternatively, ultraviolet absorption type glasses are also frequently used. Since such glasses efficiently absorb light in an infrared region or an ultraviolet region, it is preferable that the wavelength of light emitted from a light emitting element used in the dew condensation detecting apparatus falls in a visible light region.

In a dew condensation preventing system having a configuration which has been conventionally proposed, as stated above, several requirements are imposed to a light emitting element, and no light emitting diodes which can completely satisfy these requirements have not been found, and accordingly, the system has not yet been materialized up to now.

An object of the present invention is to provide a dew condensation detecting apparatus which can directly use a light emitting element that is small-sized and inexpensive, such as a light emitting diode since it has a configuration essentially independent of a wavelength of detected light, and the heat capacity of the detecting apparatus body and the amount of heat generated therefrom become less so as to allow the detecting apparatus body to be small-sized, and further, which is excellent in detectability.

### Disclosure of Invention

The present invention premises such a configuration of an apparatus that a light beam is introduced into a transparent plate from a light emitting element which is located together with a light receiving element, outside of the transparent plate, then the light beam is transmitted through the transparent plate with repetitions of total reflection before it is detected by the light receiving element, and accordingly, a degree of dew condensation on the surface of the transparent plate is detected in accordance with a variation in quantity of detected light. Accordingly, the present invention is characterized in that the above-mentioned transparent plate is formed of a laminated glass composed of at least two sheet glasses which are bonded to each other through the intermediary of an intermediate film in a part of which a reflection film is formed in parallel with the surfaces of the sheet glasses, a micro-mirror array in which a plurality of oblique reflection surfaces inclined to the surfaces of the sheet glasses are arranged, being spaced from one another, is provided in the reflection film around one end of the latter, and the light emitting element and the light receiving element are arranged being juxtaposed with each other, outside of the laminated glass, in the vicinity of the other end of the reflection film, wherein a light beam from the light emitting element travels within only one of the sheet glasses with the repetitions of reflection on the reflection film and total reflection on the surface of the glass, and the light beam is reflected by the micro-mirror array, turning back to the light receiving element.

With the use of the reflection film provided in the part of the intermediate film, since the light beam travels in only one of the sheet glasses, the number of repetitions of total reflection is increased while the detection surface (in a zone in which a signal from the light receiving element varies when water drops stick to) is also extended, and therefore, the detectability and the detection accuracy can be enhanced. Further, since the micro-mirror array is provided in the part of light turn-back, reflection angles are independent of a wavelength while the optical path is stabilized, thereby it is possible to use any of various types of light emitting elements.

Incidentally, the micro-mirror array has such a configuration that a plurality of triangular columnar members made of, for example, transparent materials are arranged being proximate with each other, and a reflection film is formed on one oblique side surface of each of the triangular columnar members. The triangular columnar members in the micro-mirror array may be either straight-line like or arcuately curvilinear about the midpoint, as a center point, between the light emitting element and the light receiving element.

The micro-mirror array and the reflection film are formed on the inner surface of one of the sheet glasses. In this case, the micro-mirror array and the reflection film may be formed on a transparent film which is then bonded to the inner surface of the one of the sheet glasses.

The plane angle between the optical axis of the light emitting element and the optical axis of the light receiving element is set to be not greater than 30 degrees (preferably, not greater than 10 degrees), and it is preferable that the light emitting element and the light receiving element are arranged so as to be proximate to each other as possible as it can. A light emitting diode is preferably used as the light emitting element, and a photo diode or the like is used as the light receiving element. Prisms each of which is provided with a collimate lens are provided respectively between the light emitting element and the glass surface and between the light receiving element and the glass surface so that the light beam from the light emitting element is collimated and then introduced into the sheet glass while a return light beam led from the sheet glass is converged by the lens before it is incident upon the light receiving element.

The light beam from the light emitting element is incident upon the sheet glass with an incident angle in a range of 42.5 to 63 degrees (preferably within a range of 45 to 47 degrees), and an angle of the oblique reflection surfaces in the micro-mirror array is also set to be substantially equal to the above-mentioned incident angle. The distance from the position where light beam from the light emitting element is incident upon the sheet glass and light beam into the light receiving element is outgoing from the sheet glass to the center position of the micro-mirror array is preferably set to a value from 25 to 100mm. A green glass may be used as the sheet glass, and in this case a light emitting diode which can emit a green light beam with high transmittance with respect to the green glass is preferably used as the light emitting element.

It is noted that the dew condensation according to the present invention includes not only a narrow dew condensing condition in which vapors in the atmospheric air is condensed into water drops sticking to the glass surface, but also a condition in which the glass surface is fogged by moisture sticking thereto.

### Brief Description of Drawings

Fig. 1 is a view for explaining an embodiment of a dew condensation detecting apparatus according to the present invention;
Fig. 2 is a plan view illustrating another embodiment of the dew condensation detecting apparatus according to the present invention;
Fig. 3 is a view for explaining an example of a method of manufacturing a reflection film and a micro-mirror array;
Fig. 4 is a view for explaining another example of the method of manufacturing the reflection film and the micro-mirror array;
Fig. 5 is a graph which shows an example of variation in received light quantity vs. incident angle;
Fig. 6 is a graph which shows an example of output variation caused by dew condensation, vs. incident angle; and
Fig. 7 is a graph which shows an example of a transmittance vs. wave characteristic of a green glass.

### Best Mode for Carrying Out the Invention

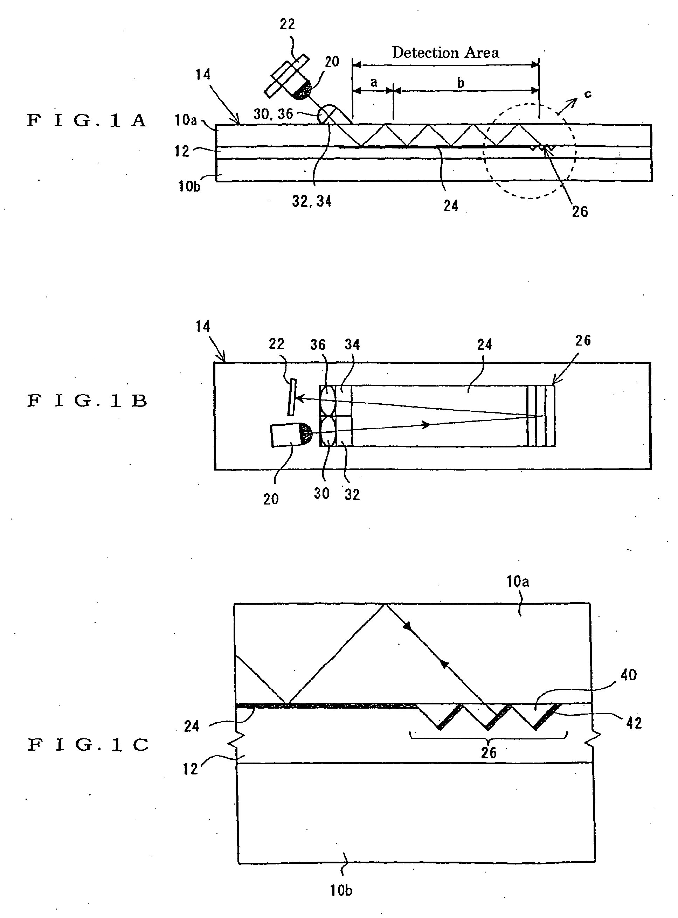

Referring to Fig. 1 which is a view for explaining an embodiment of a dew condensation detecting apparatus according to the present invention, there shows a basic configuration A as viewed in a section, a plan configuration B, and an enlarged view C of an essential part c in A. This dew condensation detecting apparatus comprises a laminated glass 14 composed of two sheet glasses 10a, 10b which are bonded to each other through the intermediary of an intermediate film 12, a light emitting element 20 and a light receiving element 22 which are arranged, proximate to each other, outside of the laminated glass 14 (the detection surface side: the upper surface in this embodiment), and a reflection film 24 and a micro-mirror array 26 which are provided in a part of the intermediate film 12.

A lens 30 for collimating a light beam from the light emitting element 20, and a light introducing prism 32 are located between the light emitting element 20 and a glass surface while a light delivery prism 34 and a lens 36 for converging a delivered light beam are located between the glass surface and the light receiving element 22, they being arranged on the glass surface. The light introducing prism 32 is set so that the incident angle of the light beam from the light emitting element with respect to the laminated glass falls in a range of 42.5 to 63 degrees, and the light delivery prism 34 has a similar configuration. Further, the light emitting element 20 and the light receiving element 22 are arranged so that the plane angle between the optical axis of the light emitting element 20 and the optical axis of the light receiving element 22 becomes as small as possible (not greater than 10 degrees in this embodiment), and the light emitting element 20 and the light receiving element 22 are arranged proximate to each other. It is noted that a light emitting diode is used as the light emitting element 20 while a photo diode is used as the light receiving element 22 in this embodiment.

The reflection film 24 is provided in a part of the intermediate film 12 in the laminated glass 14, in parallel with the surface of the sheet glass 10a. This may be a metal thin film having high reflectance. The micro-mirror array 26 is located around one end of the reflection film 24 (around an end part on the side remote from the position where the light emitting element and the light receiving element are located). This micro-mirror array 26 has such a configuration that a plurality of triangular columnar members 40 made of transparent materials, are arranged, proximate to one another, and one oblique side surface of each of the triangular columnar members 40 is formed thereon with a reflection film 42. The angle of the reflection surface (the angle of the oblique surface of the triangular columnar member 40) is set to a value which is substantially equal to the incident angle of a light beam from the light emitting element 20 with respect to the sheet glass 10a. The oblique side surface of each of the triangular columnar members 40, which is formed thereon with the reflection film 42 may be an oblique surface on the side where the light beam from the light emitting element 20 is incident.

In this dew condensation detecting apparatus, the light beam from the light emitting element 20 is collimated into a parallel ray light beam by the lens 30, then is led through the light introducing prism 32, and is introduced into one 10a of the sheet glasses. The light beam introduced in the sheet glass 10a is then reflected on the reflection film 24, and is totally reflected at the interface between the glass 10a and the air, it traveling through the sheet glass 10a with the repetitions of the reflection and the total reflection. The incident angle is set to be not less than 42.5 degrees so that the total reflection is caused at the interface between the glass and the air, but the incident angle is set to be not greater than 63 degrees so that the light beam coming to a part where a water drop sticks to the glass is radiated into the air. The light beam travels while it repeats the total reflection comes to the micro-mirror array 26 where the light beam is turned back toward the light receiving element 22. This return light beam also travels through the sheet glass 10a while it repeats the reflection on the reflection film 24 and the total reflection on the glass surface, and is converged by the lens 36 by way of the light delivery prism 34 before it is incident upon the light receiving element 22.

If water drops do not stick to the glass surface, the total reflection is caused at the interface between the glass and the air, and accordingly, the light beam is confined within the sheet glass 10a so that the quantity of received light by the light receiving element 22 is large. However, if water drops stick to the glass surface, no total reflection is caused at the interface between the water drops and the air, and accordingly, the light beam is transmitted through the interface so that the quantity of received light by the light receiving element 22 decreases. Thus, a degree of dew condensation can be detected in accordance with a light quantity detected by the light receiving element.

The light emitting element 20, the light receiving element 22, the lenses 30, 36 and the prisms 32, 34 are all accommodated in a common housing in a practical configuration, although it is not shown in Fig. 1, so as to constitute a detecting apparatus body which can be fixed on the glass surface at a predetermined position.

The detection area is defined from the position where light beam from the light emitting element 20 is incident upon the sheet glass 10a and light beam into the light receiving element 22 is outgoing from the sheet glass 10a to the center of the micro-mirror array 26. This distance (the length of the detection area) is preferably set to about 25 to 100mm. Around the detection apparatus body, there is a zone (a heat capacity affection zone a) where the dew condensation condition varies due to its heat capacity, and where the degree of dew condensation is different from that of a zone where a field of view should be ensured. Although the detecting apparatus body is small-sized so as to decrease the heat capacity, the heat capacity affection zone a ranges to about 20mm from the detecting apparatus body according to a measurement . Accordingly, the effective detection area b is a zone far from the heat capacity affection zone a. Further, the detection of dew condensation requires at least two repetitions of the total reflection on the glass surface in order to obtain detection accuracy, but excessive repetitions of the total reflection also causes larger decay during traveling of the light beam. In view of these facts, the length of the detection area (the heat capacity affection zone a (= 20mm) + the effective detection area b) is preferably set to a value from about 25 to 100mm. Should it become longer than 100mm, the apparatus would be large-sized so that detection with high detectability is difficult in view of the performance of a practical amplifier circuit.

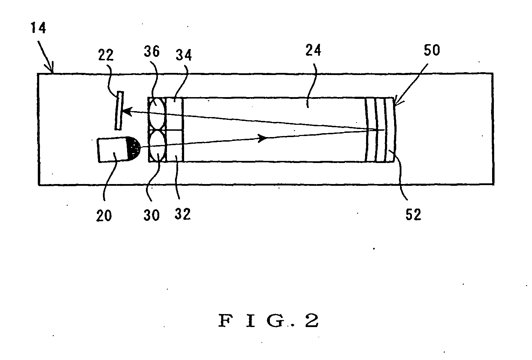

Referring to Fig. 2 which is a plan view illustrating another example of the dew condensation detecting apparatus according to the present invention, the configuration of this embodiment is the same as that of the embodiment shown in Fig. 1, except the micro-mirror array, and accordingly, the same reference numerals are used to denote like components to those shown in Fig. 1 so as to omit explanation thereto. Each of triangular columnar members 52 in the micro-mirror array 50 has such a shape that it is arcuately curved about the midpoint between the light emitting element 20 and the light receiving element 22 as a center point. In the case of using a light emitting diode as the light emitting element, the light beam is sometimes diffused even though the collimator lens is used. With such a configuration that the triangular columnar members in the micro-mirror array are arcuately curved, the diffusion of the light beam can be restrained, thereby it is preferable.

In a laminated glass used for a windshield glass for a vehicle, the thickness of the sheet glasses on both sides is from 1.8 to 2.3mm while the thickness of the intermediate layer (for example, a polyvinyl butyral layer) is about 0.76mm. Thus, it is required that not only the reflection film but also the micro-mirror array should have a thickness not greater than about 0.5mm. Since it is required that the light beams carries out several repetitions of reflection, the reflectance is preferably at least 75% with a normal incident light beam in order to restrain a loss caused by reflection. Specifically, a metal thin film may be used. The triangular columnar members constituting the micro-mirror array are made of transparent resin materials (for example, acrylic resin) having a refractive index substantially equal to that of the sheet glasses, and one oblique side surface thereof is formed thereon with a reflection film formed of a metal thin film or the like.

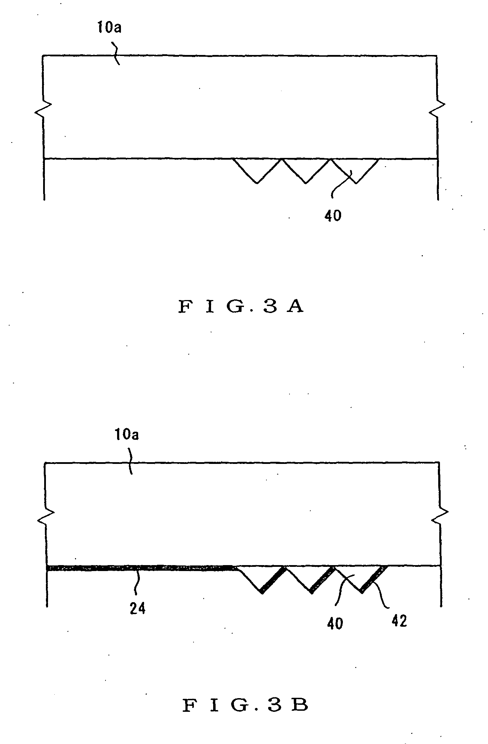

Fig. 3 shows an example of a method of manufacturing the reflection film and the micro-mirror array. As shown in A, a plurality of triangular columnar members 40 made of transparent materials are formed on one side surface of the sheet glass 10a, being proximate to one another. There are shown three triangular columnar members conveniently arranged in this figure for the sake of brevity of the figure, but a several number of them is set in view of a degree of size of the light beam which is reflected in turn-back, and a configuration of the triangular columnar members (the height and bottom side size thereof). Usually, the number is set to about several tens to one hundred and several tenfold. The array configuration of the triangular columnar members can be simply and efficiently formed by transferring the transparent resin material with the use of, for example, a stamping process. It is noted that a transparent resin material having a refractive index which is substantially equal to that of the glass is used (for example, acrylic resin is used) in order to restrain reflection at the interface with respect to the glass. The configuration of each of the triangular columnar members is such that the height thereof is not greater than about 0.5mm (about 25µm in a prototype), and the inclined angle is set in a range from about 42.5 to 63 degrees

Next, as shown in B, reflection films 24, 42 are simultaneously formed thereon. With oblique deposition in a 45 degrees right downward direction, the metal thin film is deposited only on an oblique side surface of the triangular columnar member 42, and accordingly, a satisfactory reflection surface which does not depend upon wavelengths can be formed. For example, aluminum or titanium may be used as reflection film materials.

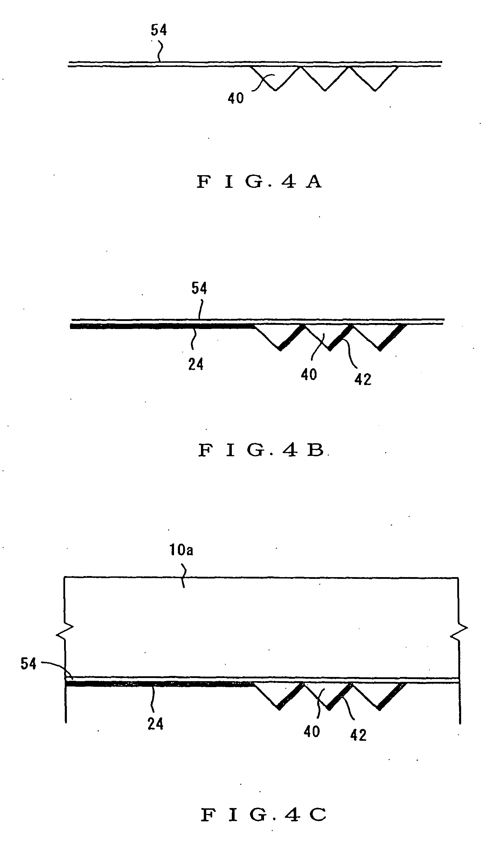

Fig. 4 shows another example of the method of manufacturing the reflection film and the micro-mirror array. Process steps, methods and materials are basically the same as those shown in Fig. 3, and brief explanation will be hereinbelow made. As shown in A, a plurality of triangular columnar members 40 made of transparent materials are formed on one side surface of a transparent film (or a sheet) 54, being arranged, proximate to each other. The configuration of the array of the triangular columnar members 40 can be simply and efficiently formed also in this case by transferring a transparent resin material with the use of, for example, a stamping process. It is noted that a material having a refractive index equal to that of the glass is used (for example, a polyester film is used) as the transparent film in order to restrain occurrence of reflection at the interface with respect to the glass. The same is said for the transparent resin material, that is, for example, acrylic resin may be used. It is noted that there may be used a method of integrally molding a structure in which the film and the triangular columnar members are integrally incorporated with each other.

Next, as shown in B, the reflection films 24, 42 are formed thereon. With oblique deposition in a 45 degrees right downward direction, a metal thin film is deposited so as to form a satisfactory reflection surface which is independent of wavelengths. Thereafter, as shown in C, a transparent film 54 is applied to the sheet glass 10a. In this method, the detection part alone can be separately manufactured without handling a laminated glass having a large size, and accordingly, it is easily in handling, thereby it is possible to offer such an advantage that the productivity can be enhanced.

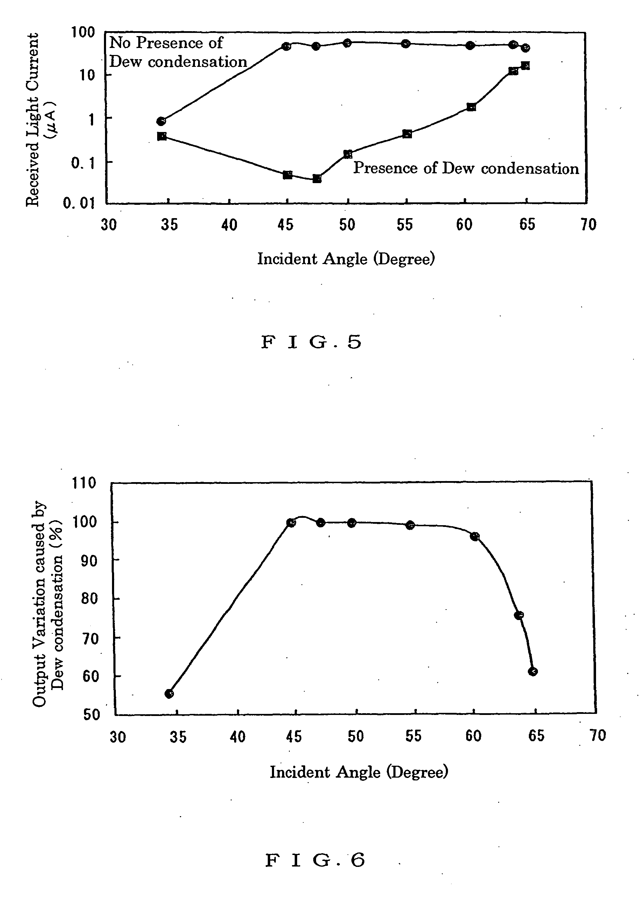

Examples of result of measurements are shown in Figs. 5 and 6. Fig. 5 shows variations in received light current vs. incident angle of a light beam upon both occasions when dew condensation occurs (another side is invisible through the glass) and when no dew condensation occurs. It is found that a difference between presence of dew condensation and no presence of dew condensation is large if the incident angle is around 45 degrees. Further, Fig. 6 shows a relationship between the incident angle of a light beam and the output variation rate due to dew condensation (output of the light receiving element upon dew condensation/output of the light receiving element upon no dew condensation). Referring to this figure, it is found that the output variation rate due to dew condensation becomes high in a range from 45 to 60 degrees of incident angle. Thus, a degree of dew condensation can be precisely detected by the apparatus according to the present invention.

In the case of application of the dew condensation detecting apparatus according to the present invention for detection of dew condensation on a windshield glass in a vehicle, it is preferably installed in a part which is around the upper side part of the windshield glass, and in particular on the back side of a rear view mirror at the center of the upper side thereof in order to prevent the ensuring a field of view from being obstructed.

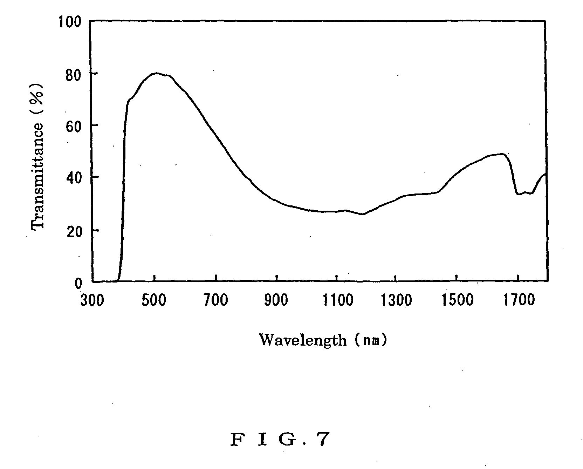

It is noted that a usual float glass having a soda lime composition or a green glass is preferably used as the sheet glass. Alternatively an ultraviolet absorption type green glass may be also used. Fig. 7 shows an example of a transmittance vs. wavelength characteristic of a green glass. The green glass has a peak of transmittance around a wavelength of 520 nm. Thus, a green light emitting diode having an emitted light wavelength of 520 nm is optimum as the light emitting element for the green glass.

### Industrial Applicability

In the dew condensation detecting apparatus according to the present invention as stated above, a light beam is reflected by the reflection film provided in a part of the intermediate layer in the laminated glass, and the light beam is reflected through turn-back by the micro-mirror array in which a plurality of oblique reflection surfaces inclined to the glass surface are arranged, being spaced from one another, and accordingly, its configuration is not essentially dependent upon a wavelength of a detected light beam, thereby it is possible to directly use a small-sized and inexpensive light emitting element such as a light emitting diode. Thus, the heat capacity of the detecting apparatus and the amount of heat generated therefrom can be decreased, and accordingly, the apparatus can be simply small-sized since the detection surface can be arranged proximate to the detecting apparatus body. Further, the detectability becomes satisfactory in view of these facts.

## Claims

1. An apparatus for detecting a degree of dew condensation caused on a surface of a transparent plate in accordance with a variation in quantity of detected light, in which a light emitting element and a light receiving element are arranged outside of the transparent plate, a light beam from the light emitting element is introduced into the transparent plate in order to detect a light beam traveling through the transparent plate with repetitions of total reflection by the light receiving element,
**characterized in that** the transparent plate is made of a laminated glass composed of at least two sheet glasses which are bonded together through the intermediary of an intermediate film, a reflection film is provided in a part of the intermediate film, in parallel with surfaces of the sheet glasses, and a micro mirror array in which a plurality of oblique reflection surfaces inclined to the surfaces of the sheet glasses are arranged being spaced from one another, is arranged around one end of the reflection film, the light emitting element and the light receiving element being juxtaposed with each other, outside of the laminated glass in the vicinity of the other end of the reflection film,
wherein the light beam from the light emitting element travels through only one of the sheet glasses with repetitions of reflection on the reflection film and total reflection on the glass surface, and the light beam is reflected through turn-back by the micro-mirror array toward the light receiving element.

2. A dew condensation detecting apparatus as set forth in claim 1, wherein the micro-mirror array has such a configuration that a plurality of triangular columnar members made of transparent materials are arranged, proximate to one another, and each of the triangular columnar members is formed on an oblique side surface thereof with a reflection film.

3. A dew condensation detecting apparatus as set forth in claim 2, wherein each of the triangular columnar members in the micro-mirror array has a shape in which it is arcuately curved about a midpoint between the light emitting element and the light receiving element as a center point.

4. A dew condensation detecting apparatus as set forth in claim 2 or 3, wherein the micro-mirror array and the reflection film are formed on the inner side surface of one of the sheet glasses.

5. A dew condensation detecting apparatus as set forth in claim 2 or 3, wherein the micro-mirror array and the reflection film is formed on a transparent film which is then bonded to the inner side surface of one of the sheet glasses.

6. A dew condensation detecting apparatus as set forth in any one of claims 1 to 5, wherein a plane angle between the optical axis of the light emitting element and the optical axis of the light receiving element is not greater than 30 degrees.

7. A dew condensation detecting apparatus as set forth in claim 6, wherein prisms incorporating collimator lenses are arranged between the light emitting element and the glass surface and between the light receiving element and the glass surface, respectively, the light beam from the light emitting element is collimated by the lens and is then introduced into the sheet glass while a return light beam is led out from the sheet glass and is converged by the lens before it is incident upon the light receiving element, and a light emitting diode is used as the light emitting element.

8. A dew condensation detecting apparatus as set forth in claim 7, wherein an incident angle of the light beam from the light emitting element with respect to the laminated glass is set in a range from 42.5 to 63 degrees, and the angle of the oblique reflection surfaces in the micro-mirror array is set to be substantially equal to the incident angle.

9. A dew condensation detecting apparatus as set forth in claim 8, wherein a distance from the position where light beam from the light emitting element is incident upon the laminated glass and light beam into the light receiving element is outgoing from the laminated glass to the center position of the micro-mirror array is set in a range from 25 to 100mm.

10. A dew condensation detecting apparatus as set forth in any one of claims 1 to 9, wherein at least one of the sheet glasses consists of a green glass, and a green light emitting diode is used as the light emitting element.
